# FASCICULE DE BREVET EUROPEEN

(11) **EP 0 474 850 B1**
(45) Date de publication et mention de la délivrance du brevet: **03.08.1994**
(21) Numéro de dépôt: 91907589.5
(22) Date de dépôt: 29.03.1991
(51) Int. Cl.: A47J 27/022

(54) **RECIPIENT DE CUISSON A FOND INDEFORMABLE A LA CHALEUR**
KOCHGEFÄSS MIT FORMSTABILEM HITZEBESTÄNDIGEM BODEN
COOKING VESSEL WITH A BOTTOM RESISTANT TO DEFORMATION BY HEAT

(30) Priorité: 30.03.1990 FR 9004096; 05.10.1990 FR 9012301
(43) Date de publication de la demande: 18.03.1992
(73) Titulaire: SEB S.A., F-21260 Selongey (FR)
(72) Inventeur: COUDURIER, Alain, F-73410 Albens (FR)
(74) Mandataire: Rodhain, Claude
(86) Numéro de dépôt international: FR9100249
(87) Numéro de publication internationale: WO9115142

(56) Documents cités:
- EP-A- 0 246 607
- EP-A- 0 268 186
- US-A- 4 676 151

## Description

La présente invention concerne un récipient de cuisson dont le fond résiste à la déformation sous l'effet de la chaleur transmise par les plaques chauffantes électriques et les brûleurs à gaz.

L'invention s'applique en particulier aux récipients de cuisson réalisés par emboutissage d'un disque en aluminium, tels que poêles à frire, casseroles, sauteuses et analogues.

On sait que les fonds des récipients de cuisson, notamment lorsqu'ils présentent une épaisseur relativement faible par exemple de l'ordre de 2 à 4 mm, ont tendance à se déformer sous l'effet de la source de chaleur appliquée sur la face extérieure dudit fond.

Cette déformation est constituée par un bombage du fond dont la convexité est dirigée par la source de chaleur.

Ce bombage est dû au fait que la face extérieure du fond du récipient dirigée vers la chaleur est, lors de la cuisson, portée à une température nettement supérieure à celle de la face intérieure du récipient.

L'écart entre ces températures est accentué par la présence des aliments à l'intérieur du récipient qui réduisent la température de la face intérieure de ce dernier. Ainsi, il est courant que la face extérieure du fond soit portée à plus de 500°C alors que la température de la face intérieure du récipient ne dépasse pas une centaine de degrés. Cet écart de température a pour conséquence que le métal se dilate plus dans la zone adjacente à la surface extérieure du fond que dans celle adjacente à la face intérieure. Il en résulte ainsi un bombage du fond du récipient dont la convexité est dirigée vers la source de chaleur. Ce bombage est encore plus prononcé lorsque le récipient est placé sur une plaque de cuisson en fonte ou en matière vitrocéramique.

Ce bombage du fond des récipients de cuisson présentent plusieurs inconvénients.

D'une part ce bombage réduit notablement la surface de contact entre le fond du récipient et la plaque de cuisson, ce qui a pour conséquence un gaspillage d'énergie.

D'autre part, ce bombage entraîne de mauvaises conditions de cuisson étant donné que la matière grasse, au lieu de s'étaler uniformément sur la surface intérieure du fond, tend à s'accumuler au centre de cette dernière.

Pour remédier à la déformation précitée, on a proposé des récipients de cuisson à fonds épais, c'est-à-dire des fonds dont l'épaisseur atteint près de 10 mm.

Toutefois, ces récipients à fonds épais présentent les inconvénients d'être coûteux, lourds à l'utilisation et d'augmenter les temps de cuisson étant donné que l'épaisseur de ces fonds diminue la vitesse de la transmission de la chaleur vers les aliments.

Le but de la présente invention est de remédier aux inconvénients des réalisations connues, en créant un récipient de cuisson dont le fond ne se déforme pas sous l'effet de la chaleur transmise par les plaques chauffantes électriques et les brûleurs à gaz, ce fond pouvant être relativement mince et en particulier aussi mince que le fond des récipients en aluminium classique qui se déforme à la chaleur.

Suivant l'invention, le récipient de cuisson, comportant un fond présentant une face destinée à être exposée à une source de chaleur et présentant une série de gorges sensiblement radiales et éventuellement des gorges concentriques, est caractérisé en ce que la profondeur des gorges radiales est comprise entre le quart et la moitié de l'épaisseur du fond du récipient et la largeur de ces gorges radiales est comprise entre le cinquième et deux fois et demi l'épaisseur du fond, ledit fond étant dépourvu de gorges concentriques dans la partie comprise entre les extrémités opposées des gorges radiales.

L'expérience a montré que lorsque le fond du récipient présente un nombre suffisant de gorges radiales et lorsque la profondeur et l'épaisseur de celles-ci sont suffisantes, ce fond résiste à la déformation engendrée par la chaleur d'une plaque de cuisson classique ou en matière vitrocéramique ou d'un brûleur à gaz.

Ce résultat surprenant peut s'expliquer a posteriori comme suit :

Les gorges précitées divisent le fond du récipient en un certain nombre de zones qui ne sont reliées les unes aux autres par le métal du fond seulement dans la partie proche de la face intérieure du récipient. Ainsi, dans la partie proche de la surface extérieure du fond, le métal situé dans les diverses zones séparées par les gorges peut se dilater librement le long de cercles concentriques centrés au milieu du fond, sans produire d'effet sur les zones voisines. Il faut en effet, pour rendre le fond indéformable, que les gorges intersectent des cercles centrés au centre du fond.

Autrement dit, cette dilatation a pour effet de réduire la largeur des gorges, sans déformer, c'est-à-dire sans bomber le fond.

Cette explication montre que la largeur et la profondeur des gorges sont critiques. Cette largeur doit en effet être suffisante pour que les zones de métal séparées par les gorges puissent se dilater librement les unes par rapport aux autres. Ainsi la largeur minimale des gorges pourrait être calculée, en fonction du coefficient de dilatation du métal utilisé et des températures atteintes sur les surfaces extérieure et intérieure du fond.

La profondeur des gorges est également critique. Cette profondeur doit être aussi importante que possible, sans toutefois atteindre une valeur limite au-delà de laquelle le fond du récipient n'aurait plus une résistance mécanique suffisante.

L'effet ci-dessus n'est pas constaté lorsque le fond du récipient comporte, comme il est connu selon l'état de la technique divulgué par les brevets CH 131 063 et EF-0 268 186, des gorges concentriques intersectant les gorges radiales. En effet, ces gorges concentriques ont pour désavantage de diminuer la résistance mécanique du fond en créant des zones dans lesquelles l'épaisseur de métal est faible. Ces zones, contrairement au but recherché, ont tendance à favoriser le bombage du fond.

Selon une version préférée de l'invention, ces gorges radiales divisent le fond du récipient en une série de zones sensiblement égales et régulièrement réparties autour du centre du fond.

Bien entendu, ces gorges peuvent s'écarter d'une direction radiale et être en forme de courbe au lieu d'être rectilignes.

D'autres particularités et avantages de l'invention apparaîtront encore dans la description ci-après.

Aux dessins annexés, donnés à titre d'exemples non limitatifs :
- la figure 1 est une vue en coupe axiale d'une poêle à frire classique posée sur une plaque de cuisson et déformée sous l'effet de la chaleur d'une plaque de cuisson ;
- la figure 2 est une vue en coupe axiale d'une poêle à frire réalisée selon l'invention ;
- la figure 3 est une vue en plan montrant la face extérieure du fond de la poêle à frire selon l'invention ;
- la figure 4 est une vue en plan analogue à la figure 3 montrant une variante de réalisation de l'invention ;
- les figures 5 et 6 sont des vues en plan montrant la face extérieure de diverses variantes de réalisation de l'invention.
- la figure 7 est une vue en plan du fond d'une poêle correspondant à une version préférée de l'invention ;
- la figure 8 est une vue en coupe suivant le plan X-X de la figure 7 ;

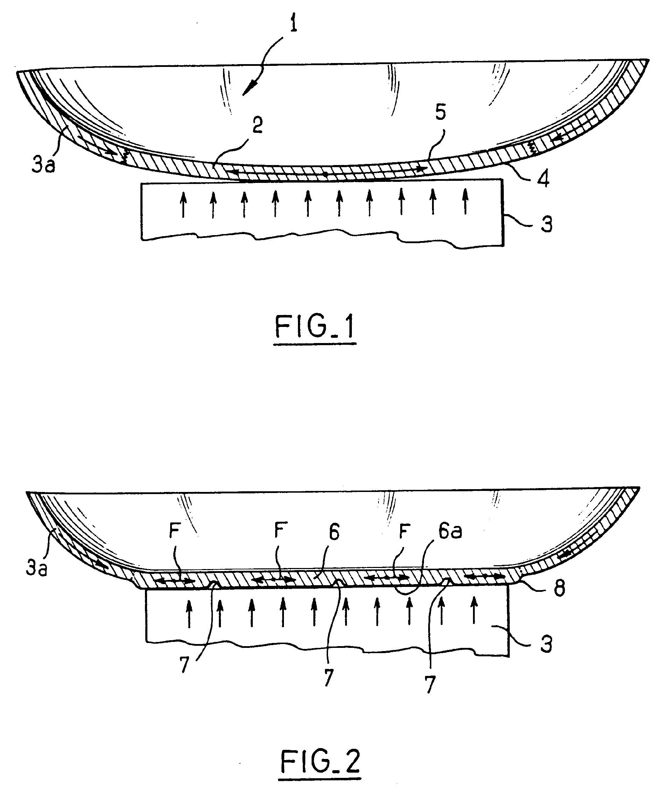

La figure 1 montre une poêle à frire 1 dont le fond 2 est bombé sous l'effet de la chaleur dégagée par la plaque de cuisson 3 sur laquelle repose ce fond 2.

Ce bombage du fond 2 résulte du fait qu'il est entouré par une couronne de métal 3a qui reste sensiblement froide et qui empêche la dilatation du fond 2 vers l'extérieur.

Par ailleurs, lors de la cuisson, la face extérieure 4 du fond 2 en contact avec la plaque de cuisson 3 est portée à une température qui atteint facilement 500°C, tandis que la face intérieure 5 en contact avec les aliments ne dépasse guère 100°C.

De ce fait, la zone de métal adjacente à la face 4 se dilate plus que la zone adjacente à la face 5, de sorte que le fond 2 se bombe comme indiqué sur la figure 1.

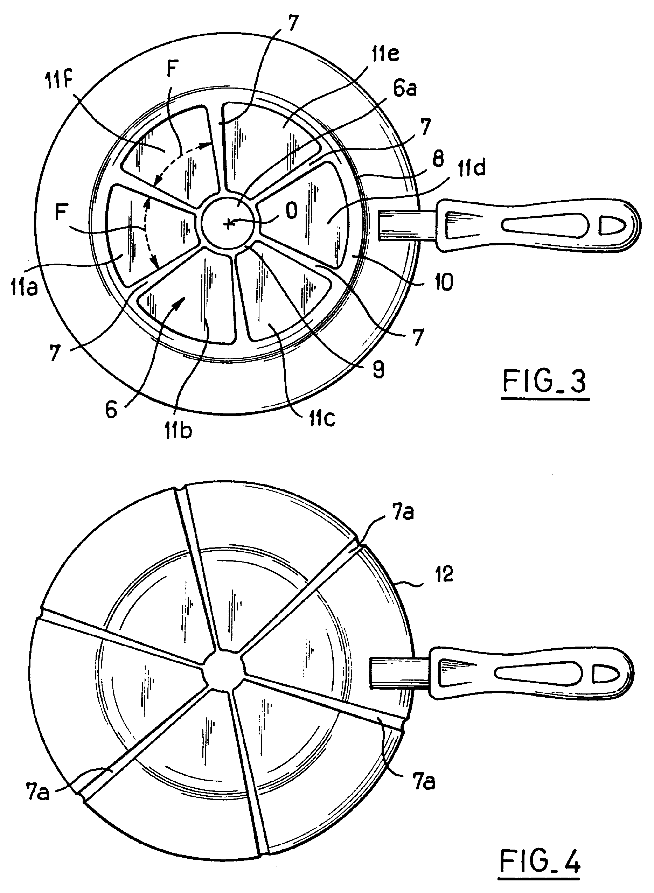

Pour empêcher ce bombage du fond de la poêle et sans augmenter l'épaisseur de ce dernier, la face 6a du fond 6 de la poêle selon l'invention représentée sur les figures 2 et 3 présente une série de gorges 7 s'étendant de la périphérie 8 dudit fond 6 vers le centre O de celui-ci.

Dans l'exemple représenté sur la figure 3, les gorges 7 sont radiales et s'étendent à partir d'une gorge circulaire 9 centrée au centre O du fond 6 jusqu'à une autre gorge circulaire 10 ménagée à la périphérie 8 de ce fond.

La gorge circulaire 9 a un rayon qui est nettement inférieur à la moitié du rayon du fond 6.

La profondeur et la largeur des gorges 7 sont suffisantes pour rendre le fond 6 indéformable sous l'effet de la chaleur exercée par la source de chaleur 3.

De préférence, la profondeur des gorges 7 est comprise entre le cinquième et la moitié de l'épaisseur du fond 6 de la poêle.

La largeur des gorges 7 est de préférence comprise entre le quart et deux fois l'épaisseur du fond 6.

Dans le cas d'une poêle réalisée à partir d'une feuille d'aluminium d'épaisseur comprise entre 2,5 et 6 mm, la profondeur des gorges 7 peut être comprise entre 0,5 et 3 mm et leur largeur comprise entre 0,6 et 15 mm.

Les gorges 7 peuvent être réalisées aisément de préférence par matriçage, mais également par fonderie suivant les formes réalisées dans le moule ou par usinage.

Comme montré par la figure 3, la largeur des gorges 7 peut augmenter régulièrement entre le centre O du fond 6 et la périphérie 8 de celui-ci.

Les gorges radiales 7 divisent le fond 6 de la poêle en plusieurs secteurs 11a, 11b, 11c, 11d, 11e, 11f égaux entre eux.

Les effets techniques procurés par les gorges 7 pratiquées dans le fond 6 de la poêle sont les suivants :
- du fait de ces gorges 7, le métal situé près de la source de chaleur 3 peut se dilater dans le sens des flèches F représentées sur la figure 3,
- cette dilatation est "absorbée" par la largeur des gorges 7, de sorte que les secteurs 11a, ... 11f peuvent se dilater librement les uns par rapport aux autres,
- il en résulte que la dilatation des secteurs 11a, ... 11f n'engendre aucune déformation du fond du fait du frettage réalisé par la couronne périphérique 3a.

Comme déjà indiqué plus haut, on peut déterminer par calcul, l'épaisseur des gorges 7 pour que celles-ci puissent absorber la dilatation. Cette épaisseur peut également être déterminée expérimentalement.

La profondeur des gorges 7 est dictée par la résistance mécanique du fond 6, de sorte qu'il convient d'éviter que cette profondeur dépasse la moitié de l'épaisseur du fond 6 notamment lorsque celui-ci est en aluminium et présente une épaisseur habituelle de l'ordre de 3 mm.

De préférence, la section des gorges 7 est évasée vers l'extérieur, étant donné que la dilatation thermique est plus importante à la surface extérieure du fond 6 que dans la zone située près du fond des gorges 7. Cette particularité, de plus, favorise le nettoyage des gorges 7.

L'invention permet ainsi par une simple opération de matriçage, usinage ou fonderie suivant les formes du moule, de rendre indéformables à la chaleur des fonds de récipients de cuisson qui normalement, compte tenu de leur épaisseur, se déforment facilement.

Les figures 4 à 6 montrent des variantes de réalisation de l'invention.

Dans le cas de la figure 4, les gorges 7a sont également radiales, mais elles se prolongent jusqu'au bord extérieur 12 de la poêle.

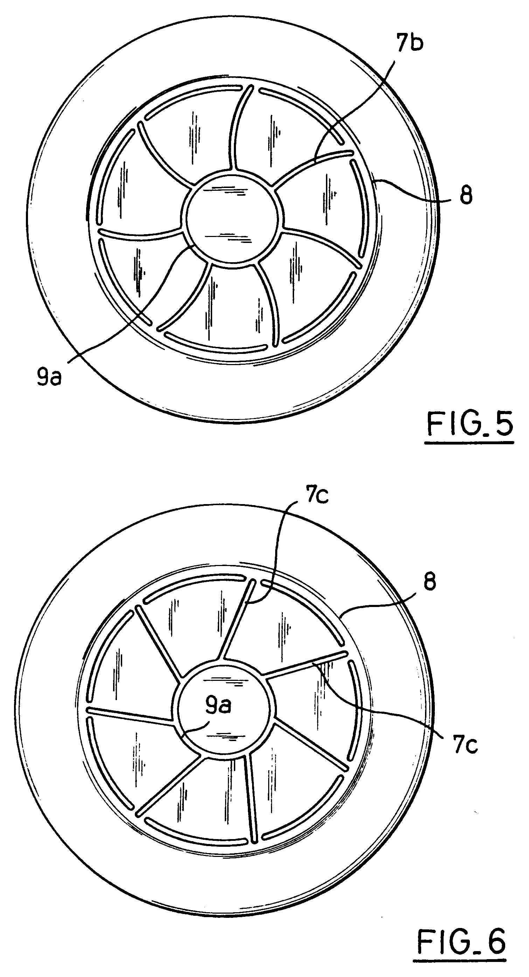

Dans la variante représentée sur la figure 5, les gorges 7b ne sont pas exactement radiales, mais constituées par des arcs s'étendant à partir d'une gorge circulaire 9a située près du centre jusqu'à la périphérie 8 du fond. Les extrémités des gorges 7b sont toutefois situées sur des directions radiales.

Dans le cas de la figure 6, les gorges 7c sont droites, mais inclinées par rapport à des directions radiales.

Dans les exemples représentés sur les figures 5 et 6, les gorges 7b et 7c divisent le fond des récipients de cuisson en zones dans lesquelles le métal peut se dilater sans induire de déformation.

Comme dans le cas des figures 1 et 2, les gorges 7b et 7c peuvent être réalisées facilement par matriçage, opération qui présente l'avantage par rapport à un usinage, d'être de mise en oeuvre rapide et de ne pas enlever de métal.

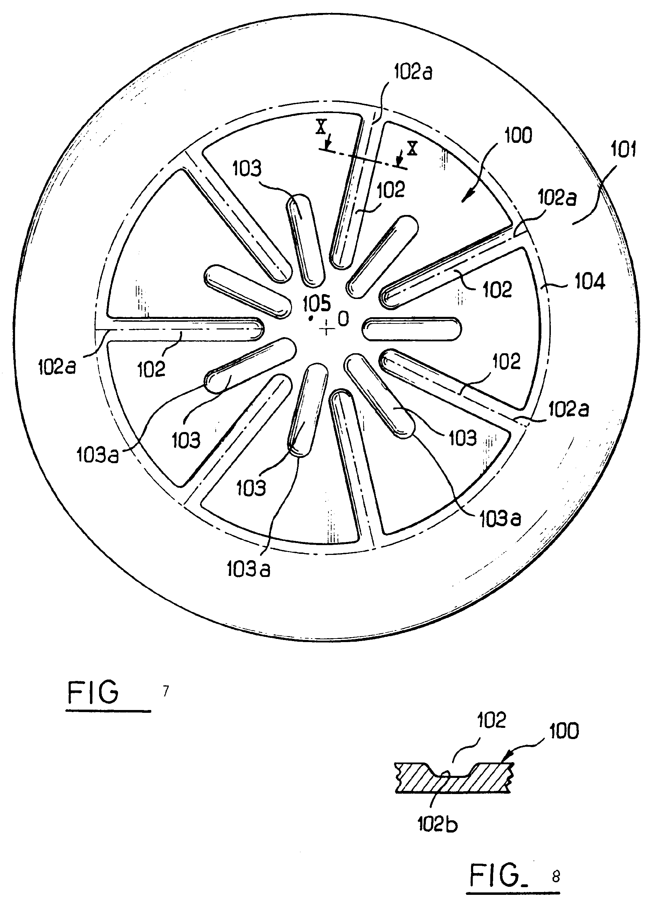

La poêle représentée sur la figure 7 a été réalisée par matriçage d'un disque en aluminium d'épaisseur habituellement comprise entre 2,4 et 6 mm.

Cette poêle comprend un fond circulaire et plat 100 bordé latéralement par une paroi latérale 101.

Ce fond circulaire 100 comporte une première série de gorges radiales 102 dont les extrémités opposées au centre 0 du fond débouchent, c'est-à-dire s'ouvre sur la face latérale 101 de la poêle.

Une seconde série de gorges 103 est disposée entre la première série de gorges 102. Cette seconde série de gorges 103 est plus courte que la première et leurs extrémités 103a opposées au centre 0 est fermées.

Autour du centre 0 s'étend une zone de métal 105 qui dépourvue de gorges.

Dans la réalisation représentée sur la figure 7, la seconde série de gorges 103 est située à mi-distance de la première série de gorges 102.

Par ailleurs, la première série de gorges 102 débouche à l'extrémité 102a de celle-ci dans une gorge circulaire 104 ayant pour centre, le centre 0 du fond 100. D'autre part, les gorges 103 ont une extrémité qui est plus proche du centre 0 que celle des gorges 102.

Le nombre de gorges 102 de la première série est égal à 7. Celles-ci divisent ainsi le fond 100 en 7 secteurs égaux limités à la périphérie par la gorge circulaire 104 et intérieurement par la zone circulaire de métal 105.

La largeur des gorges 102, 103 est comprise entre 8 et 12 mm (de préférence 10 mm) et leur profondeur est comprise entre 0,5 et 1,5 mm, la profondeur préférée des gorges longues 102 étant égale à 1 mm et celle des gorges plus courtes 103 étant de 0,5 mm.

Comme le montre la figure 8, les gorges 102, comme d'ailleurs les gorges 103 sont évasées vers l'extérieur, leur section transversale étant sensiblement trapézoïdales. Cette forme est aisément obtenue par matriçage.

La largeur du fond 102b des gorges 102 est de préférence comprise entre 2 et 4 mm, la valeur optimale étant selon les résultats des éssais égale à 3mm.

Les éssais ont démontré qu'une poêle à frire en aluminium répondant aux caractéristiques décrites ci-dessus résistait sans déformation à la chaleur exercée par une plaque de cuisson ou un brûleur, même lorsque le fond a une épaisseur aussi faible que 2,4 mm. Ce résultats est obtenu notamment grâce la présence des gorges courtes 103 près du centre 0.

On notera qu'une poêle classique matricée en aluminium, et de même épaisseur, se déforme considérablement sous l'effet de la chaleur, ce qui la rend incompatible à son utilisation sur des plaques de cuisson.

## Revendications

1. Récipient de cuisson comportant un fond (6) présentant une face (6a) destinée à être exposée à une source de chaleur (2), présentant une série de gorges (7) sensiblement radiales et éventuellement des gorges concentriques, caractérisé en ce que la profondeur des gorges radiales (7) est comprise entre le quart et la moitié de l'épaisseur du fond (6) du récipient et la largeur de ces gorges (7) est comprise entre le cinquième et deux fois et demi l'épaisseur du fond (6), ledit fond étant dépourvu de gorges concentriques dans la partie comprise entre les extrémités opposées des gorges radiales.

2. Récipient conforme à la revendication 1, caractérisé en ce que lesdites gorges (7) divisent le fond en plusieurs secteurs sensiblement égaux (11a, ... 11f).

3. Récipient conforme à l'une des revendications 1 ou 2, réalisé à partir d'une feuille d'aluminium d'épaisseur comprise entre 2,5 et 6 mm, caractérisé en ce que la profondeur des gorges (7) est comprise entre 0,5 et 3 mm et leur largeur est comprise entre 0,6 et 15 mm.

4. Récipient conforme à l'une des revendications 1 à 3, caractérisé en ce que les gorges (7) sont réalisées par matriçage, fonderie ou usinage.

5. Récipient conforme à l'une des revendications 1 à 4, caractérisé en ce que la largeur des gorges (7) augmente régulièrement du centre (0) du fond (6) vers la périphérie (8) de celui-ci.

6. Récipient conforme à l'une des revendications 1 à 5, caractérisé en ce que ces gorges (7) s'étendent vers la périphérie (8) à partir d'une gorge circulaire (9) centrée au milieu du fond (6) et dont le rayon est inférieur à la moitié du rayon dudit fond (6).

7. Récipient conforme à l'une des revendications 1 à 6, caractérisé en ce que la section des gorges (7) est évasée vers l'extérieur.

8. Récipient conforme à la revendication 1, caractérisé en ce que le fond (100) comporte une première série de gorges (102) dont les extrémités (102a) opposées au centre (0) du fond débouchent sur la face latérale (101) du récipient, une seconde série de gorges (103) étant disposée entre la première série de gorges, cette seconde série de gorges (103) étant plus courte que la première leurs extrémités (103a) opposées au centre (0) étant fermées.

9. Récipient conforme à la revendication 8, caractérisé en ce que la seconde série de gorges (103) est située à mi-distance entre la première série de gorges (102).

10. Récipient conforme à l'une des revendications 8 à 9, caractérisé en ce que la première série de gorges (102) débouche dans une gorge circulaire (104) centrée au centre (0) du fond et située à la périphérie de celui-ci .

11. Récipient conforme à l'une des revendications 8 à 10, caractérisé en ce que le nombre de gorges de la première série est égal à 7.

12. Récipient conforme à l'une des revendications 8 à 11, caractérisé en ce que la largeur des gorges (102, 103) est comprise entre 8 et 12 mm et leur profondeur est comprise entre 0,5 et 1,5 mm.

13. Récipient conforme à l'une des revendications 8 à 11, caractérisé en ce que la largeur des gorges (102, 103) est égale à 10 mm, la profondeur des gorges de la première série étant égale à 1 mm et celle de la seconde série (103) égale à 0,5 mm.

14. Récipient conforme à l'une des revendications 8 à 13, caractérisé en ce que les gorges (102, 103) sont évasées vers l'extérieur, leur section étant sensiblement trapézoïdale.

15. Récipient conforme à la revendication 14, caractérisé en ce que la largeur du fond (102b) des gorges (102, 103) est comprise entre 2 et 4 mm et de préférence 3 mm.

## Patentansprüche

1. Kochgefäß mit einem Boden (6), der eine Fläche (6a) aufweist, die dazu bestimmt ist, einer Wärmequelle (2) ausgesetzt zu werden, und die eine Reihe von im wesentlichen radialen Nuten (7) und gegebenenfalls konzentrische Nuten aufweist, dadurch gekennzeichnet, daß die Tiefe der radialen Nuten (7) zwischen einem Viertel und der Hälfte der Dicke des Bodens (6) des Gefäßes und die Breite dieser Nuten (7) zwischen einem Fünftel und dem 2,5fachen der Dicke des Bodens (6) beträgt, wobei der Boden in dem zwischen den entgegengesetzten Enden der radialen Nuten liegenden Teil von konzentrischen Nuten frei ist.

2. Gefäß nach Anspruch 1, dadurch gekennzeichnet, daß die Nuten (7) den Boden in mehrere im wesentlichen gleiche Sektoren (11a, ... 11f) unterteilen.

3. Gefäß nach einem der Ansprüche 1 oder 2, das aus einem Aluminiumblech mit einer Dicke zwischen 2,5 und 6 mm hergestellt ist, dadurch gekennzeichnet, daß die Tiefe der Nuten (7) zwischen 0,5 und 3 mm und ihre Breite zwischen 0,6 und 15 mm beträgt.

4. Gefäß nach einem der Ansprüche 1 bis 3, dadurch gekennzeichnet, daß die Nuten (7) durch Prägung, durch Gießen oder Bearbeitung hergestellt sind.

5. Gefäß nach einem der Ansprüche 1 bis 4, dadurch gekennzeichnet, daß die Breite der Nuten (7) gleichmäßig vom Zentrum (0) des Bodens (6) zum Umfang (8) desselben gleichmäßig zunimmt.

6. Gefäß nach einem der Ansprüche 1 bis 5, dadurch gekennzeichnet, daß diese Nuten (7) sich zum Umfang (8) ausgehend von einer kreisförmigen Nut (9) erstrecken, die auf der Mitte des Bodens (6) zentriert ist und deren Radius kleiner als die Hälfte des Bodens (6) ist.

7. Gefäß nach einem der Ansprüche 1 bis 6, dadurch gekennzeichnet, daß der Querschnitt der Nuten (7) nach außen erweitert ist.

8. Gefäß nach Anspruch 1, dadurch gekennzeichnet, daß der Boden (100) eine erste Reihe von Nuten (102) aufweist, deren dem Zentrum (0) des Bodens entgegengesetzte Enden (102a) an der Seitenfläche (101) des Gefäßes ausmünden, wobei eine zweite Reihe von Nuten (103) zwischen den Nuten der ersten Reihe angeordnet ist und die Nuten (103) dieser zweiten Reihe kürzer sind als die der ersten, wobei ihre dem Zentrum (0) entgegengesetzten Enden (103a) geschlossen sind.

9. Gefäß nach Anspruch 8, dadurch gekennzeichnet, daß die Nuten (103) der zweiten Reihe im halben Abstand von den Nuten (102) der ersten Reihe gelegen sind.

10. Gefäß nach einem der Ansprüche 8 bis 9, dadurch gekennzeichnet, daß die Nuten (102) der ersten Reihe in einer kreisrunden Nut (104) ausmünden, die auf dem Zentrum (0) des Bodens zentriert ist und am Umfang desselben liegt.

11. Gefäß nach einem der Ansprüche 8 bis 10, dadurch gekennzeichnet, daß die Anzahl von Nuten der ersten Reihe gleich 7 ist.

12. Gefäß nach einem der Ansprüche 8 bis 11, dadurch gekennzeichnet, daß die Breite der Nuten (102, 103) zwischen 8 und 12 mm und ihre Tiefe zwischen 0,5 und 1,5 mm beträgt.

13. Gefäß nach einem der Ansprüche 8 bis 11, dadurch gekennzeichnet, daß die Breite der Nuten (102, 103) gleich 10 mm ist, wobei die Tiefe der Nuten der ersten Reihe gleich 1 mm und die der zweiten Reihe (103) gleich 0,5 mm ist.

14. Gefäß nach einem der Ansprüche 8 bis 13, dadurch gekennzeichnet, daß die Nuten (102, 103) nach außen hin erweitert sind, wobei ihr Querschnitt im wesentlichen trapezförmig ist.

15. Gefäß nach Anspruch 14, dadurch gekennzeichnet, daß die Breite des Bodens (102b) der Nuten (102, 103) zwischen 2 und 4 und vorzugsweise 3 mm beträgt.

## Claims

1. A cooking vessel comprising a base (6) having a face (6a) intended to be exposed to a heat source (2), said face having a series of substantially radial grooves (7) and possibly concentric grooves, characterised in that the depth of the radial grooves (7) is in the range of one-quarter to one-half of the thickness of the vessel base (6) and the width of said grooves (7) is within the range of one-fifth and two-and-a-half times the thickness of said base (6), said base having no concentric grooves in the part contained between the opposite ends of the radial grooves.

2. A vessel according to claim 1, characterised in that the said grooves (7) divide the base into a plurality of substantially equal sectors (11a, ... 11f).

3. A vessel according to claims 1 or 2, formed from a sheet of aluminium having a thickness within the range of 2.5 to 6 mm, characterised in that the depth of the grooves (7) is within the range of 0.5 to 3 mm and their width is within the range of 0.6 to 15 mm.

4. A vessel according to any one of claims 1 to 3, characterised in that the grooves (7) are formed by die-stamping, casting or machining.

5. A vessel according to any one of claims 1 to 4, characterised in that the width of the grooves (7) increases regularly from the centre (0) of the base (6) to the periphery (8) of the latter.

6. A vessel according to any one of claims 1 to 5, characterised in that said grooves (7) extend towards the periphery (8) from a circular groove (9) which is centred on the centre of the base (6) and the radius of which is smaller than one-half the radius of said base (6).

7. A vessel according to any one of claims 1 to 7, characterised in that the cross-section of the grooves (7) is flared outwards.

8. A vessel according to claim 1, characterised in that the base (100) has a first series of grooves (102) whose ends (102a) remote from the centre (0) of the base open on to the lateral face (101) of the vessel, a second series of grooves (103) being arranged between the first series of grooves, this second series of grooves (103) being shorter than the first and their ends (103a) remote from the centre (0) being closed.

9. A vessel according to claim 8, characterised in that the second series of grooves (103) is located at one-half the distance of the first series of grooves (102).

10. A vessel according to claim 8 or 9, characterised in that the first series of grooves (102) opens into a circular groove (104) which is centred on the centre (0) of the base and which is located at the periphery of the latter.

11. A vessel according to any one of claims 8 to 10, characterised in that the number of grooves of the first series is equal to seven.

12. A vessel according to any one of claims 8 to 11, characterised in that the width of the grooves (102, 103) is within the range of 8 to 12 mm and their depth is within the range of 0.5 to 1.5 mm.

13. A vessel according to any one of claims 8 to 11, characterised in that the width of the grooves (102, 103) is equal to 10 mm, the depth of the grooves of the first series being equal to 1 mm and that of the second series (103) being equal to 0.5 mm.

14. A vessel according to any one of claims 8 to 13, characterised in that the grooves (102, 103) are flared outwards, their cross-section being substantially trapezoidal.

15. A vessel according to claim 14, characterised in that the width of the bottom (102b) of the grooves (102, 103) is within the range of 2 to 4 mm and preferably 3 mm.
